# DEMANDE DE BREVET EUROPEEN

(11) **EP 4 632 976 A1**
(43) Date de publication de la demande: **15.10.2025**
(21) Numéro de dépôt: 25168613.5
(22) Date de dépôt: 04.04.2025
(51) Int. Cl.: H02G 7/05

(54) **DISPOSITIF D'ANCRAGE D'UN CÂBLE À UN SUPPORT TEL QU' UN POTEAU**

(30) Priorité: 10.04.2024 FR 2403675
(71) Demandeur: Telenco, 38430 Moirans (FR)
(72) Inventeur: COUVERT, Jean-Luc, 38690 BEVENAIS (FR)
(74) Mandataire: Germain Maureau

(57) **Abrégé**

Le dispositif d'ancrage (1) forme un logement de réception du câble (100) et comprend :
- un corps (10) comportant des moyens d'accrochage (11) à un support et un coin de serrage (30) ayant une forme convergent vers l'aval ;
- un fourreau (40) ayant une forme convergent vers l'aval, monté autour du coin de serrage de façon coulissante longitudinalement ;
- une plaquette (50) montée entre le coin de serrage et le fourreau, comportant une languette (60) en saillie pourvue d'une encoche (61) venant en prise avec le fourreau suite à une traction exercée sur le câble vers l'amont ;
- des moyens de séparation (21) d'une portion amont du câble par rapport au support, activés lorsqu'une traction exercée sur le câble vers l'amont dépasse un seuil prédéfini.

## Description

L'invention concerne un dispositif d'ancrage d'un câble à un support tel qu'un poteau.

Les câbles d'un réseau de distribution d'énergie ou de de données peuvent suivre un cheminement aérien en étant soutenus à intervalles par des poteaux ou autres supports. De plus, il est nécessaire d'ancrer le câble sur certains de ces supports.

A cet effet, il est connu d'utiliser un dispositif d'ancrage du type comportant un corps pourvu de moyens d'accrochage au support et comportant un coin de serrage autour duquel est monté un fourreau convergent. Le câble est placé entre le fond du fourreau, une plaquette, et le coin de serrage. Le déplacement du fourreau vers l'amont (c'est-à-dire à l'opposé du poteau) par rapport au corps conduit au rapprochement entre le coin de serrage et le fond du fourreau, et donc au serrage du câble dans le dispositif d'ancrage.

Lors de situations accidentelles comme la chute d'un arbre sur le câble, la traction que le câble exerce sur le poteau peut être telle que le poteau ou son ancrage au sol risquent d'être très fortement endommagés.

Pour limiter les conséquences d'une telle situation accidentelle sur l'intégrité du réseau, la distribution d'énergie ou de de données, et la sécurité des biens et des personnes, il peut être prévu un système de coupe du câble au-delà d'une certaine traction, afin de préserver le support.

Le bon fonctionnement du système de coupe implique que le câble reste bien maintenu dans le dispositif d'ancrage.

De façon concrète, la plaquette peut être conçue pour s'agripper au câble, et être pourvue de languettes en saillie. Ainsi, une traction sur le câble vers l'amont par rapport au corps du dispositif d'ancrage se traduit par un déplacement de la plaquette vers l'amont jusqu'à ce que les languettes viennent en butée contre le fourreau, le câble ne pouvant alors plus se déplacer par rapport au fourreau.

Cependant, l'amplitude de la traction exercée sur le câble, et donc sur la plaquette, peut être tellement importante que les languettes de la plaquette, au lieu de venir en butée contre le fourreau, se déforment au contact du fourreau. Elles ne jouent donc plus leur rôle de butée, si bien que le câble est alors libre de se déplacer vers l'amont à l'intérieur du dispositif d'ancrage, sans être coupé. Le câble peut alors tomber au sol, avec les risques que cela comporte.

L'invention vise à remédier à ce problème.

A cet effet, l'invention concerne un dispositif d'ancrage d'un câble à un support, tel qu'un poteau, le dispositif définissant une direction longitudinale, un côté aval situé du côté du support en position montée, et un côté amont opposé au côté aval, le dispositif comprenant :
- un corps comportant :
   -- du côté aval, des moyens d'accrochage au support ;
   -- du côté amont, un coin de serrage présentant une forme qui converge en direction des moyens d'accrochage ;
- un fourreau présentant une section transversale en U et comportant un fond et deux ailes, le fourreau présentant une forme convergeant vers l'aval et étant monté autour du coin de serrage de façon coulissante longitudinalement, le déplacement du fourreau vers l'amont par rapport au corps occasionnant un rapprochement entre le coin de serrage et le fond du fourreau ;
- une plaquette montée entre le coin de serrage et le fourreau, la plaquette comportant :
   -- une base globalement plane qui, en position montée, est disposée sensiblement parallèlement au fond du fourreau de sorte qu'est défini entre la base de la plaquette et le fond du fourreau un logement de réception d'un câble, ledit logement s'étendant longitudinalement, la base de la plaquette comportant des moyens de maintien configurés pour coopérer avec un câble disposé dans le logement pour maintenir le câble en position par rapport à la plaquette au moins selon la direction longitudinale ;
   -- au moins à sa partie extrême aval, au moins une languette faisant saillie par rapport à la base, la languette s'étendant à l'extérieur du fourreau ;
- des moyens de séparation configurés pour provoquer, en position montée, la séparation par rapport au support d'une portion amont d'un câble placé dans le logement du dispositif, lesdits moyens de séparation étant configurés pour être activés lorsqu'une traction exercée sur le câble vers l'amont dépasse un seuil prédéfini.

Selon une définition générale de l'invention, la languette de la plaquette comprend une encoche qui, en position montée, est apte à venir en prise avec le fourreau consécutivement à une traction exercée sur le câble vers l'amont, en-deçà dudit seuil prédéfini, de sorte que la plaquette vienne s'accrocher sur le fourreau.

Grâce aux encoches ménagées sur la languette, la languette ne vient pas en simple butée contre le fourreau, mais s'accroche à celui-ci. De façon concrète, une portion du fourreau - typiquement une zone d'une paroi du fourreau située du côté aval du fourreau - vient se loger dans l'encoche. Il existe donc un maintien de la languette par rapport au fourreau non seulement selon la direction longitudinale, mais également selon une direction globalement orthogonale aux deux bords de l'encoche qui sont en regard l'un de l'autre, c'est-à-dire de part et d'autre de ladite portion du fourreau logée dans l'encoche. Ceci empêche notamment la languette de se rabattre en direction de la base de la plaquette, lors d'une traction exercée sur le câble vers l'amont, ce qui aurait pour conséquence que la languette ne serait plus retenue par le fourreau.

Ainsi, grâce à l'invention, la languette ne peut pas être désolidarisée du fourreau par une traction vers l'amont exercée sur celle-ci, via le câble reçu dans le logement.

Une fois qu'une portion de la paroi du fourreau est reçue dans l'encoche de la languette, le câble étant lui-même solidaire de la plaquette - selon la direction longitudinale - grâce aux moyens de maintien, le câble ne peut pas glisser par rapport au fourreau vers l'amont. En d'autres termes, dans cette configuration, le câble, la plaquette et le fourreau sont solidaires en ce qui concerne leur mouvement de translation vers l'amont par rapport au corps. En conséquence, si l'effort de traction vers l'amont sur le câble se poursuit, puisque le corps est fixé au support, c'est le coin qui glisse vers l'aval par rapport au fourreau, jusqu'à un blocage relatif par coincement. Puis, au-delà du seuil de traction prédéfini, les moyens de séparation sont activés. Le support ne subit alors plus la traction amont exercée sur le câble et est protégé de ses effets.

Le fourreau peut présenter une forme complémentaire de celle du coin de serrage, tout particulièrement de la forme extérieure du coin de serrage.

Les moyens de maintien au câble peuvent être conçus pour agripper le câble. Ils comprennent par exemple au moins un relief agencé en saillie vers le câble et possédant un bord libre au moins partiellement pointu, apte à pénétrer dans la matière du câble.

Selon une réalisation possible, à sa partie extrême aval, la plaquette comprend deux languettes faisant saillie par rapport à la base, chacune des languettes s'étendant à l'extérieur du fourreau et au moins l'une d'elles comprenant une encoche. De préférence, chacune de ces deux languettes comprend un encoche. Ceci permet d'améliorer l'accrochage de la plaquette au fourreau. Ces languettes sont par exemple symétriques par rapport à un plan longitudinal médian de la plaquette.

Selon une réalisation possible, la plaquette comprend à sa partie extrême amont au moins une languette faisant saillie par rapport à la base, s'étendant à l'extérieur du fourreau et comprenant une encoche. De préférence, la plaquette comprend deux telles languettes pourvues d'une encoche, à sa partie extrême amont. Avec cette configuration, on peut obtenir une plaquette n'ayant pas de sens de montage, relativement à la direction amont / aval, ce qui facilite la mise en oeuvre sur le terrain par un opérateur, et évite les erreurs de montage qui pourraient rendre les moyens de séparation inopérants. Ces languettes amont peuvent être symétriques par rapport à un plan longitudinal médian de la plaquette. En outre, elles peuvent être symétriques des languettes aval par rapport à un plan transversal médian de la plaquette.

Selon un mode de réalisation, la languette est située sensiblement dans le même plan que la base de la plaquette et s'étend latéralement par rapport à la base, l'encoche ménagée dans la languette étant apte à venir en prise avec une aile du fourreau.

Selon un autre mode de réalisation, la languette s'étend sensiblement orthogonalement à la base de la plaquette, à l'opposé du coin de serrage, l'encoche ménagée dans la languette étant apte à venir en prise avec le fond du fourreau.

Selon une réalisation possible, les moyens de séparation comprennent une zone de moindre résistance, par exemple une zone de moindre section, ménagée sur une portion du corps qui lie le coin de serrage et les moyens d'accrochage.

Selon une réalisation possible, les moyens de séparation comprennent une lame de coupe qui est montée sur la plaquette entre :
- une position inactive dans laquelle la lame de coupe est située à distance du logement de réception du câble ;
- et une position active dans laquelle la lame de coupe fait saillie à l'intérieur du logement sur une distance suffisante pour couper un câble situé dans le logement ;
le passage de la lame de coupe de sa position inactive à sa position active étant provoqué par le déplacement du coin de serrage vers l'aval relativement à la plaquette.

Par exemple, la plaquette comprend une patte montée pivotante par rapport à la base autour d'un axe sensiblement transversal, la lame de coupe étant ménagée sur la patte à distance dudit axe, la plaquette comportant une ouverture en regard de ladite patte, la patte pouvant pivoter entre :
- une position inactive dans laquelle la patte s'étend en oblique en direction du coin de serrage ;
- et une position active dans laquelle la patte est sensiblement rabattue dans le plan de la base de la plaquette et la lame de coupe traverse l'ouverture.

Selon une réalisation possible, le coin de serrage comprend une cavité ouverte vers le bas dans laquelle sont reçues la patte et la lame de coupe en position inactive, une face amont de la cavité formant une rampe qui est inclinée vers l'aval et à l'opposé du fond du fourreau et qui est configurée pour venir en contact avec la patte et provoquer son pivotement vers sa position active lorsque le coin de serrage se déplace vers l'aval relativement à la plaquette.

Le dispositif d'ancrage peut être pourvu de moyens de positionnement, par exemple de moyens de centrage, du câble. Ceci est tout particulièrement utile lorsqu'est prévue une lame de coupe ; en effet, il est alors important que le câble soit bien situé en regard de la lame de coupe, ce qui n'est pas automatiquement le cas si le câble et la lame de coupe sont moins larges que le logement.

Par exemple, la plaquette est assemblée sur le coin de serrage de façon mobile en translation longitudinale, la plaquette comportant une paroi amont de butée limitant la translation vers l'aval de la plaquette par rapport au coin de serrage, le dispositif d'ancrage étant configuré de sorte que, lorsque la paroi amont de butée est en contact avec la face amont du coin de serrage, la patte et la lame de coupe sont reçues dans la cavité et sont en position inactive. Ceci permet de définir la position initiale de la plaquette par rapport au coin de serrage, de façon à assurer un positionnement relatif correct garantissant le fonctionnement recherché de l'ensemble.

L'invention concerne également un ensemble comprenant un dispositif d'ancrage tel que précédemment décrit et un câble s'étendant longitudinalement dans le logement ménagé entre la base de la plaquette et le fond du fourreau.

On décrit à présent, à titre d'exemples non limitatifs, plusieurs modes de réalisation possibles de l'invention, en référence aux figures annexées :
La figure 1 est une vue en perspective d'un dispositif d'ancrage selon un mode de réalisation de l'invention, en position montée, assurant l'ancrage d'un câble à un support ;
La figure 2 est une vue en perspective éclatée d'un dispositif d'ancrage selon un premier mode de réalisation, montrant un corps, un fourreau, une plaquette et un câble ;
La figure 3 est une vue partielle latérale du dispositif d'ancrage de la figure 2, montrant le fourreau et une partie du corps ;
La figure 4 est une vue partielle de dessus du dispositif d'ancrage de la figure 2 montrant le fourreau et une partie du corps ;
La figure 5 est une vue en perspective de la plaquette de la figure 2 ;
La figure 6 est une vue de dessus de la plaquette de la figure 2 ;
La figure 7 est une section transversale du dispositif d'ancrage de la figure 2 en position montée ;
La figure 8 est une vue en perspective du dispositif d'ancrage de la figure 2 en position montée, une traction vers l'amont étant appliquée au câble ;
La figure 9 est une vue en perspective éclatée d'un dispositif d'ancrage selon un deuxième mode de réalisation ;
La figure 10 est une vue en perspective éclatée du dispositif d'ancrage de la figure 9, montrant un corps, un fourreau, une plaquette et un câble ;
La figure 11 est une vue en perspective de la plaquette de la figure 10 ;
La figure 12 est une vue en perspective de la plaquette de la figure 10, sous un autre angle ;
La figure 13 est une vue en coupe longitudinale du dispositif d'ancrage de la figure 9 en position montée;
La figure 14 est une vue similaire à la figure 13, consécutivement à l'application au câble d'une force de traction vers l'amont supérieure à un seuil prédéfini.

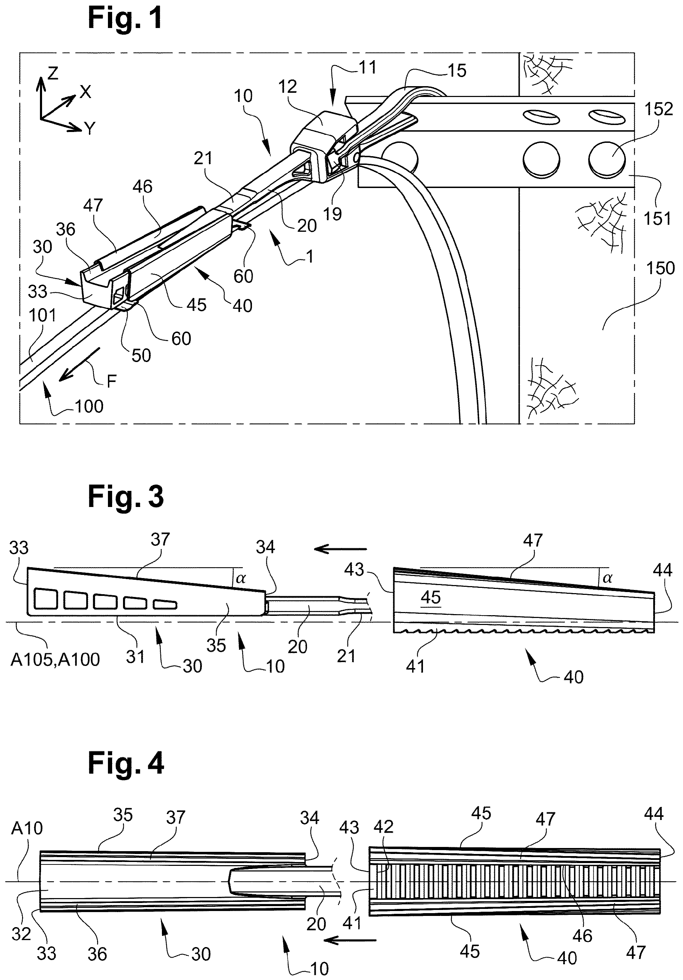

La figure 1 représente un câble 100 qui est ancré à un support 150 au moyen d'un dispositif d'ancrage 1 selon l'invention. Le support 150 est ici un poteau sur lequel est fixée une traverse 151 munie d'orifices 152. Cependant, d'autres types de supports sont possibles, comme par exemple une façade de bâtiment.

Le dispositif d'ancrage 1 définit une direction longitudinale X qui, en position montée, peut être globalement horizontale, moyennant la flèche du câble 100. Le terme « aval » désigne des éléments situés du côté du support 150 ou dirigés vers le support 150 en position montée, par opposition au terme « amont ».

On définit de plus la direction transversale Y et la direction Z comme étant orthogonales entre elles et à la direction longitudinale X. En position montée, la direction Y peut être globalement horizontale et la direction Z globalement verticale. Les termes « latéral », « transversal » sont employés en référence à la direction Y. Les termes « hauteur », « supérieur », « inférieur » et analogue sont employés en référence à la direction Z.

Le dispositif d'ancrage 1 comprend un corps 10, généralement monobloc, qui peut être en matière plastique ou en métal. Le corps 10 présente un axe A10 longitudinal.

Le corps 10 comporte, du côté aval, des moyens d'accrochage 11 au support 150. Dans l'exemple représenté, ces moyens d'accrochage 11 comprennent un bloc 12 incluant une cavité 13 qui est ouverte latéralement et qui est prolongée vers l'aval par un canal 14 de plus faibles dimensions, le canal 14 étant sensiblement longitudinal et ouvert vers l'aval. Les moyens d'accrochage 11 comprennent de plus une bande 15 en U dont une première branche 16 s'étend depuis le bloc 12 vers l'aval jusqu'à une portion coudée 17 prolongée par une deuxième branche 18 s'étendant vers l'amont. La deuxième branche 18 est pourvue à son extrémité d'une excroissance 19. En position ouverte, la bande 15 forme un U ouvert, l'excroissance 19 étant libre. La deuxième branche 18 de la bande 15 peut être passée dans un orifice 152 de la traverse 151, après quoi puis l'excroissance 19 est placée dans la cavité 13, la partie extrême de la deuxième branche 18 passant dans le canal 14. La bande 15 forme alors une boucle fermée, ou anse, et le corps 10 est attaché au support 150, comme on le voit sur la figure 1.

Le corps 10 comprend également un bras 20 qui s'étend depuis les moyens d'accrochage 11, plus précisément depuis le bloc 12, vers l'amont.

Le corps 10 comprend de plus un coin de serrage 30 qui est agencé du côté amont et lié aux moyens d'accrochage 11 par le bras 20.

Le coin de serrage 30 présente une forme qui converge en direction des moyens d'accrochage 11, c'est-à-dire vers l'aval.

Le coin de serrage 30 présente une face inférieure 31 sensiblement plane et située dans un plan (X,Y) et une face supérieure 32, ainsi qu'une face amont 33 et une face aval 34 qui sont par exemple sensiblement orthogonales à l'axe A10.

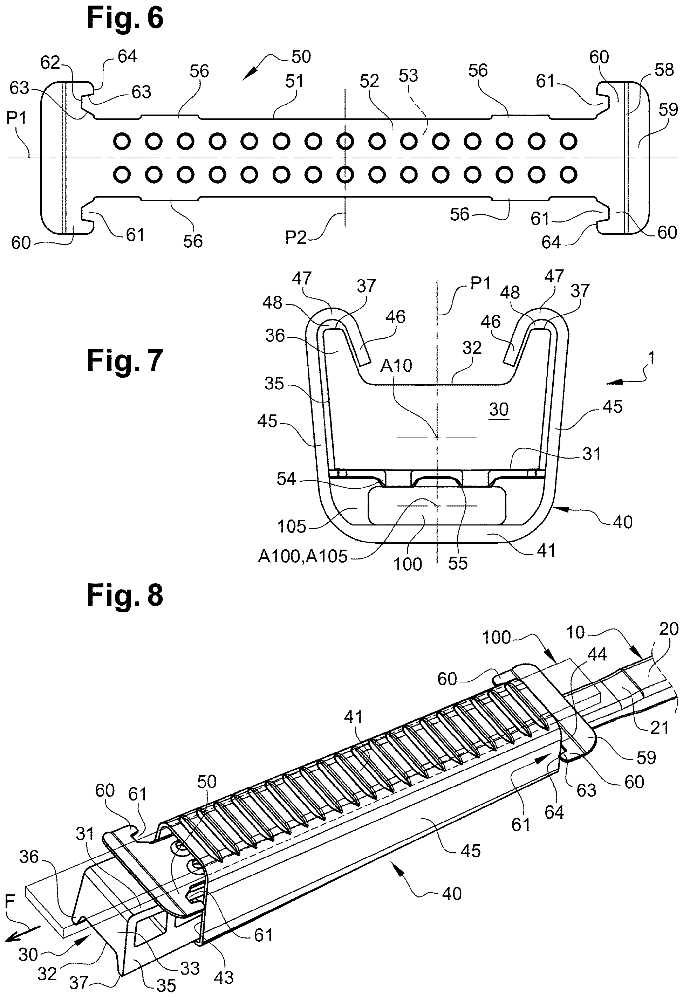

Le coin de serrage 30 présente également deux faces latérales 35 qui s'étendent globalement parallèlement à un plan (X,Z) en étant cependant inclinées par rapport à un tel plan. Plus précisément, on peut prévoir que les faces latérales 35 soient légèrement inclinées l'une vers l'autre en direction de la face inférieure 31, comme on le voit sur la figure 7. Chacune des faces latérales 35 peut être inclinée par rapport au plan P1 d'un angle inférieur à 5°, par exemple de l'ordre de 3°.

En outre, le coin de serrage 30 comprend deux nervures 36 qui s'étendent longitudinalement et qui font saillie chacune depuis la face supérieure 32, à l'opposé de la face inférieure 31 et dans le prolongement de la face latérale 35 correspondante. Comme on le voit sur la figure 4, le bord supérieur 37 des nervures 36 est incliné vers le bas et vers l'aval d'un angle α compris entre 4 et 10°, par exemple voisin de 5,5°. De préférence, la face supérieure 32 est parallèle aux bords supérieurs 37 des nervures 36, de sorte que les nervures 36 ont une hauteur constante, le long de la direction Z.

Le dispositif d'ancrage 1 comprend également un fourreau 40. Le fourreau 40 présente une section transversale en U. Il peut être réalisé en matière plastique ou en métal.

Le fourreau 40 comprend un fond 41 et deux ailes 45. Chacune des ailes 45 est prolongée à son extrémité opposée au fond 41 par un retour 46 dirigé vers l'intérieur du fourreau 40 et vers le fond 41, le retour 46 étant lié à l'aile 45 correspondante par une paroi coudée 47. Une gorge 48 est ainsi ménagée entre chaque aile 45 et le retour 46 correspondant. Le fond 41 peut présenter des saillies 42 transversales dirigées vers l'intérieur du fourreau 40 et destinées à limiter le déplacement longitudinal du câble 100. Par ailleurs, le fourreau 40 présente une extrémité amont 43 et une extrémité aval 44.

Le fourreau 40 présente une forme convergeant vers l'aval et est destiné à être monté autour du coin de façon coulissante longitudinalement.

A cet effet, la forme du fourreau 40 est de préférence complémentaire de la forme du coin de serrage 30. Plus spécifiquement, comme on le voit sur la figure 7 :
- chacune des parois coudées 47 est destinée à venir reposer sur le bord supérieur 37 de la nervure 36 correspondante, la nervure 36 étant reçue dans la gorge 48 correspondante. Les parois coudées 47 sont inclinées vers le bas et vers l'aval d'un angle α compris entre 4 et 10°, par exemple voisin de 5,5° ;
- et chacune des ailes 45 est située de façon adjacente et sensiblement parallèlement à l'une des faces latérales 35. Ainsi, les ailes 45 peuvent être légèrement inclinées l'une vers l'autre en direction de la face inférieure 31, chacune des ailes 45 pouvant être inclinée par rapport au plan P1 d'un angle inférieur à 5° par exemple de l'ordre de 3° (voir figure 7).

En position montée, le déplacement du fourreau 40 vers l'amont par rapport au corps 10 occasionne un rapprochement entre le coin de serrage 30 et le fond 41 du fourreau 40, et donc un serrage du câble 100.

Le dispositif d'ancrage 1 comprend de plus une plaquette 50 destinée à être montée entre le coin de serrage 30 et le fourreau 40. La plaquette 50 est réalisée en métal.

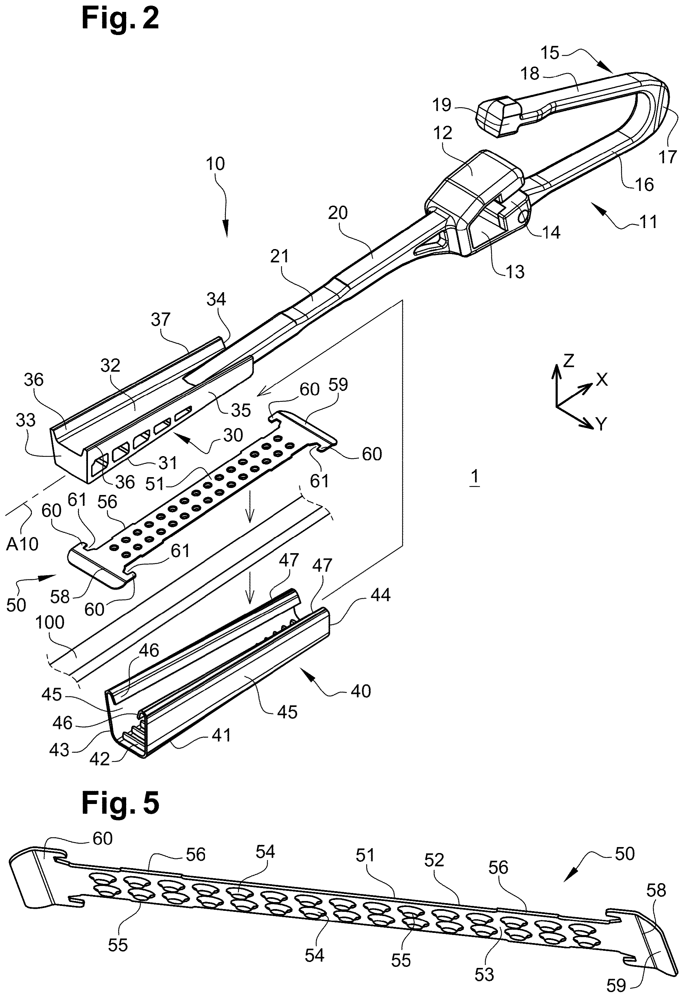

Comme on le voit tout particulièrement sur les figures 5 et 6, la plaquette 50 comporte une base 51 globalement plane, présentant de préférence une forme sensiblement rectangulaire. En position montée, la base 51 est disposée sensiblement parallèlement au fond 41 du fourreau 40, et à distance de celui-ci. Ainsi, comme on le voit sur la figure 7, il est défini entre la base 51 de la plaquette 50 et le fond 41 du fourreau 40 un logement 105 de réception du câble 100. Le logement 105 s'étend longitudinalement et présente un axe A105 avec lequel est localement confondu l'axe A100 du câble 100.

Comme on le voit sur la figure 6, la base 51 présente un plan longitudinal médian P1 et un plan transversal médian P2.

La base 51 comprend une face supérieure 52 et une face inférieure 53. Des reliefs 54 font saillie vers le bas depuis la face inférieure 53. Ces reliefs 54 se présentent par exemple sous la forme générale de cylindres ou de cônes convergeant vers le bas et tronqués, et définissent un bord libre 55 sensiblement circulaire. Le bord libre 55 peut avantageusement être fin voire pointu, de sorte à pouvoir agripper le câble 100 voire pénétrer dans la matière du câble100 disposé dans le logement 105. Les reliefs 54 forment ainsi des moyens de maintien du câble 100 en position par rapport à la plaquette 50, au moins selon la direction longitudinale X.

Selon une réalisation possible, les reliefs 54 sont répartis sur l'ensemble de la face inférieure 53, de préférence régulièrement. Ils sont par exemple agencés en deux lignes longitudinales de dix à vingt reliefs.

La plaquette 50 comporte de plus, à au moins l'une de ses parties extrêmes longitudinales, deux languettes 60 qui font saillie depuis la base 51 et qui, en position montée, s'étendent à l'extérieur du fourreau 40. De préférence, ces deux languettes 60 sont symétriques l'une de l'autre par rapport au plan longitudinal médian P1.

En outre, les languettes 60 comprennent chacune une encoche 61 qui est ouverte en direction du plan transversal médian P2, au niveau d'un bord 64 de la languette 60. L'encoche 61 comporte un fond 62, s'étendant de préférence selon la direction transversale Y, et deux bords latéraux 63 qui sont en regard l'un de l'autre et qui peuvent converger l'un vers l'autre en direction du fond 62.

Une réalisation avec une unique languette 60, bien que moins performante, pourrait être envisagée. Il en va de même pour une réalisation avec deux languettes 60 dont une seule serait pourvue d'une encoche 61.

En position montée, lorsqu'une traction F est exercée sur le câble 100 vers l'amont, les encoches 61 peuvent venir en prise avec le fourreau 40, de sorte que la plaquette 50 vienne s'accrocher sur le fourreau 40.

En outre, le dispositif d'ancrage 1 comprend des moyens de séparation qui sont configurés pour provoquer la séparation par rapport au support 150 d'une portion amont 101 du câble 100 lorsque la traction F exercée sur le câble 100 vers l'amont dépasse un seuil prédéfini. A titre d'exemple, ce seuil peut être de l'ordre de 1200 à 2000 N. De la sorte, on évite que le câble 100 ne tire sur le support 150 avec une force si importante qu'elle pourrait endommager le support 150.

On décrit plus précisément un premier mode de réalisation de l'invention en référence aux figures 1 à 7.

Selon ce mode de réalisation, les languettes 60 de la plaquette 50 sont situées sensiblement dans le même plan que la base 51. On note cependant que la ou chacune des parties extrêmes de la plaquette 50 peut comporter, au-delà d'une ligne 58 telle qu'une ligne de pliage, une portion 59 inclinée vers le bas par rapport au plan général de la base 51 de la plaquette 50.

Les languettes 60 s'étendent latéralement par rapport à la base 51, c'est-à-dire transversalement, vers l'extérieur et à l'opposé l'une de l'autre.

En outre, la plaquette 50 comporte deux languettes 60 à chacune de ses parties extrêmes longitudinales. De préférence, les deux ensembles de languettes 60 sont symétriques l'une de l'autre par rapport au plan transversal médian P2.

Par ailleurs, le bras 20 peut présenter une zone présentant une section moins importante que le reste du bras 20, dans un plan orthogonal à l'axe A10, par exemple une épaisseur moindre. L'épaisseur est la dimension du bras 20 dans une direction orthogonale à l'axe A10, ici selon la direction Z. Cette zone forme donc une zone de moindre résistance 21. Elle est par exemple située dans la partie centrale du bras 20, le long de l'axe A10.

Comme illustré sur la figure 2, le montage du dispositif d'ancrage 1 s'effectue comme suit.

Tout d'abord, le câble 100 est placé longitudinalement contre le fond 41 du fourreau 40, puis la plaquette 50 est montée dans le fourreau 40 par-dessus le câble 100, les reliefs 54 étant dirigés vers le fond 41 du fourreau 40.

La base 51 de la plaquette 50 présente une largeur inférieure à celle du fourreau 40 au niveau des extrémités supérieures des ailes 45, mais inférieure à celle du fourreau 40 au niveau du fond 41, si bien que, en position montée, la plaquette 50 est située à distance du fond 41, comme on le voit sur la figure 7. La base 51 peut en outre comporter des appendices latéraux 56 permettant d'assurer un centrage de la plaquette 50 dans le fourreau 40 selon la direction transversale Y.

Par ailleurs, la longueur de la plaquette 50 et la distance (selon la direction longitudinale X) entre les bords 64 des languettes 60 situées de part et d'autre du plan transversal médian P2 sont prévues, par rapport à la distance longitudinale entre l'extrémité amont 43 et l'extrémité aval 44 du fourreau 40, de telle sorte que la plaquette 50 peut être insérée dans le fourreau 40, le cas échéant en la courbant légèrement, la plaquette 50 reprenant ensuite sa configuration sensiblement plane.

En position montée, les languettes 60 s'étendent à l'extérieur du fourreau 40, chaque encoche 61 étant en regard - le long de la direction longitudinale X - d'une aile 45 du fourreau 40. Chaque aile 45 peut être située à distance du bord 64 de la languette 60 correspondante ou pénétrer au moins partiellement l'encoche 61 correspondante.

Dans la mesure où la plaquette 50 comporte deux languettes 60 à chacune de ses parties extrêmes longitudinales, agencées symétriquement par rapport au plan P2, la plaquette 50 n'a pas de sens de montage amont / aval à respecter, ce qui facilite le travail de l'opérateur et évite les erreurs de montage empêchant le fonctionnement approprié de l'ensemble. Dans une réalisation où des languettes 60 ne seraient présentes qu'à l'une des extrémités longitudinales de la plaquette 50, ces languettes 60 devraient être placées du côté de l'extrémité aval 44 du fourreau 40.

Le fourreau 40 recevant le câble 100 et la plaquette 50 est alors mis en place sur le coin de serrage 30. Comme représenté sur la figure 2, le fourreau 40 est orienté avec sa plus petite section côté aval, son extrémité amont 43 étant placée en regard de la face aval 34 du coin de serrage 30. On engage alors les nervures 36 du coin de serrage 30 dans les gorges 48 du fourreau 40, puis on fait coulisser le fourreau 40 par rapport au coin de serrage 30, vers l'amont, jusqu'à obtenir un coincement relatif de ces deux pièces. Simultanément, l'opérateur tire le câble 100 vers l'aval, c'est-à-dire en direction du support 150, pour lui donner la tension et la flèche souhaitées.

Du fait des formes convergentes du coin de serrage 30 et du fourreau 40, le coulissement du fourreau 40 vers l'amont par rapport au coin de serrage 30, illustré par les flèches sur figures 3 et 4, se traduit par le fait que le fond 41 du fourreau 40 se rapproche du coin de serrage 30. Le câble 100 se trouve ainsi serré dans le logement 105, entre le fond 41 du fourreau 40 et la base 51 de la plaquette 50, comme on le voit sur la figure 7. Les reliefs 54 de la plaquette 50 viennent coopérer avec le câble 100 pour l'agripper et le maintenir à l'encontre d'un glissement longitudinal par rapport à la plaquette 50.

En position montée, lorsqu'une traction F suffisante s'exerce sur le câble 100 vers l'amont, le câble 100 ainsi que la plaquette 50 par rapport à laquelle il est maintenu par les reliefs 54 sont déplacés vers l'amont jusqu'à ce que le fond 63 des encoches 61 situées du côté aval vienne en butée contre l'extrémité aval 44 du fourreau 40. Chacune des encoches 61 reçoit alors une portion d'une aile 45 du fourreau 40, et est donc en prise avec cette aile 45, comme on le voit sur la figure 8. Les languettes 60 ne sont donc pas en simple butée contre le fourreau 40, mais accrochées au fourreau 40.

A partir de cette configuration, la traction F tend à déplacer vers l'amont, ensemble, les pièces suivantes :
- le câble 100 et la plaquette 50, ces deux pièces étant maintenues ensemble grâce aux reliefs 54 ;
- et le fourreau 40, du fait de la coopération entre les encoches 61 des languettes 60 du côté aval avec les ailes 45 du fourreau 40.

Si la traction F dépasse un seuil prédéfini, susceptible de causer des dommages au support 150, le dispositif d'ancrage 1 est conçu pour provoquer la séparation par rapport au support 150 d'une portion amont 101 du câble 100. Ce seuil peut être de l'ordre de 1200 à 2000 N.

Selon ce premier mode de réalisation, les moyens de séparation du dispositif d'ancrage 1 comprennent ou sont formés par la zone de moindre résistance 21 ménagée sur le bras 20. Cette zone de moindre résistance 21 est dimensionnée pour se rompre lorsqu'elle est soumise à une force de traction correspondant au seuil prédéfini.

Il s'ensuit que le câble 100 n'est plus lié aux moyens d'accrochage 11 au support 150, et ne peut donc plus exercer par ce biais une force de traction sur le support 150. Si la portion amont 101 du câble 100 se trouve ainsi séparée du support 150, une portion aval du câble 100 peut rester accrochée au support 150 via un dispositif d'ancrage 1 adjacent. Cependant, de par la rupture de la zone de moindre résistance 21, le câble 100 est moins tendu, et la force qu'il peut exercer sur ledit dispositif d'ancrage 1 adjacent est bien moindre.

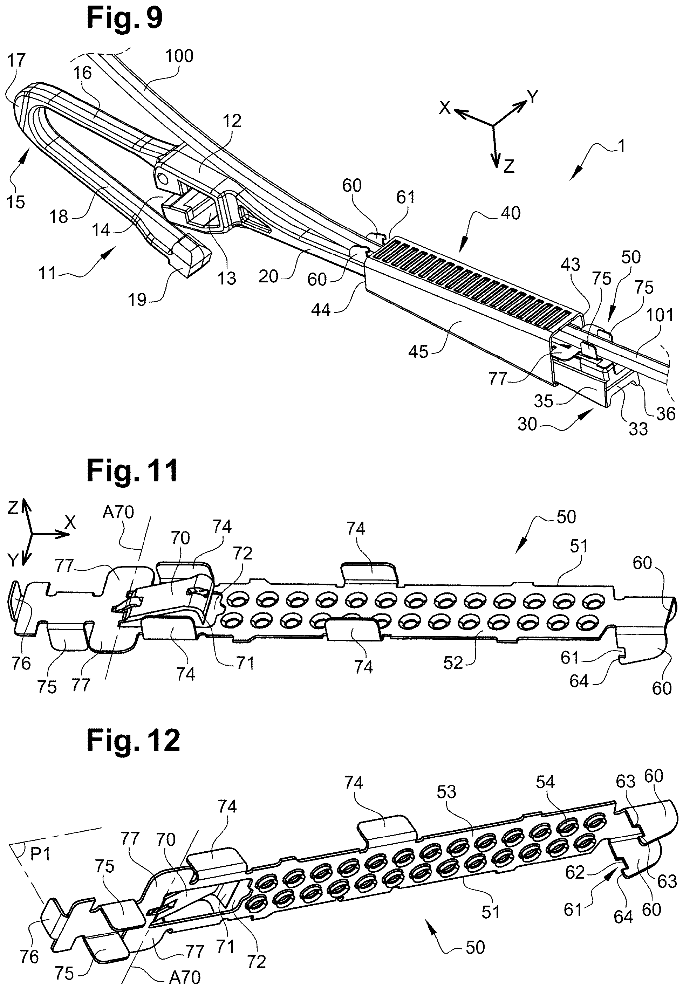

On se rapporte à présent aux figures 9 à 14 qui illustrent un deuxième mode de réalisation de l'invention.

Selon ce mode de réalisation, comme illustré plus particulièrement sur les figures 11 et 12, la plaquette 50 comprend des languettes 60 munies d'encoches 61 uniquement à sa partie extrême aval. En outre, les languettes 60 s'étendent sensiblement orthogonalement à la base 51 de la plaquette 50, vers le bas (c'est-à-dire à l'opposé du coin de serrage 30 en position montée). Chaque languette 60 s'étend ainsi sensiblement dans un plan (X,Z), de part et d'autre du plan longitudinal médian P1.

Par ailleurs, la plaquette 50 comprend une patte 70 qui est montée pivotante par rapport à la base 51 autour d'un axe A70 sensiblement transversal. L'axe A70 et la patte 70 sont de préférence disposés dans la moitié amont de la plaquette 50. L'axe A70 est ici situé au voisinage du bord amont de la patte 70.

Une lame de coupe 71 est ménagée sur la patte à distance de l'axe A70, ici au voisinage du bord aval de la patte 70. En outre, la plaquette 50 comporte une ouverture 72 en regard de la patte 70.

La patte 70 peut occuper une position inactive dans laquelle la patte 70 s'étend en oblique depuis l'axe A70 vers l'aval et en s'éloignant de la base 51. La lame de coupe 71 est alors elle aussi dans une position inactive, dans laquelle elle est située au-dessus de la face inférieure 53 de la base 51.

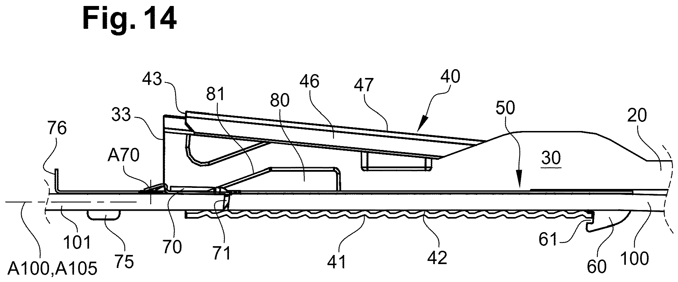

Depuis cette position active, illustrée sur les figures 11, 12 et 13, la patte 70 peut pivoter, par rapport à l'axe A70 jusqu'à une position active illustrée sur la figure 14. Dans cette position active, la patte 70 est sensiblement rabattue dans le plan de la base 51 de la plaquette 50. La lame de coupe 71 est alors également dans une position active, dans laquelle traverse l'ouverture 72 et fait saillie sous la face inférieure 53 de la base 51.

La plaquette 50 peut de plus comprendre des pattes latérales 74 mutuellement en vis-à-vis selon la direction transversale Y, les pattes latérales 74 s'étendant depuis un bord longitudinal de la base 51, vers le haut, en étant de préférence légèrement inclinées l'une vers l'autre. On peut prévoir deux ensembles de pattes latérales 74, les ensembles étant espacés l'un de l'autre le long de la direction longitudinale X.

La plaquette 50 peut aussi comprendre des pattes de centrage 75 mutuellement en vis-à-vis selon la direction transversale Y, les pattes de centrage 75 s'étendant depuis un bord longitudinal de la base 51, sensiblement orthogonalement à la base 51, vers le bas. Les pattes de centrage 75 permettent, en position montée, de placer le câble 100 de façon centrée, en évitant son déplacement transversalement, de façon qu'il soit en regard de la lame de coupe 71 et puisse être sectionné par celle-ci, comme on le verra plus loin. A cet effet, les pattes de centrage 75 sont de préférence agencées en amont de l'axe A70.

La plaquette 50 peut également comprendre une paroi amont de butée 76 s'étendant depuis le bord amont de la base 51, sensiblement orthogonalement à la base 51, vers le haut.

Enfin, la plaquette 50 peut comprendre deux pattes amont 77 qui s'étendent sensiblement dans le plan de la base 51, latéralement et à l'opposé l'une de l'autre. Ces pattes amont 77 sont par exemple localisées selon la direction longitudinale X entre les pattes de centrage 75 et l'ouverture 72. Elles servent de butée amont pour le fourreau 40, comme on le voit sur la figure 9.

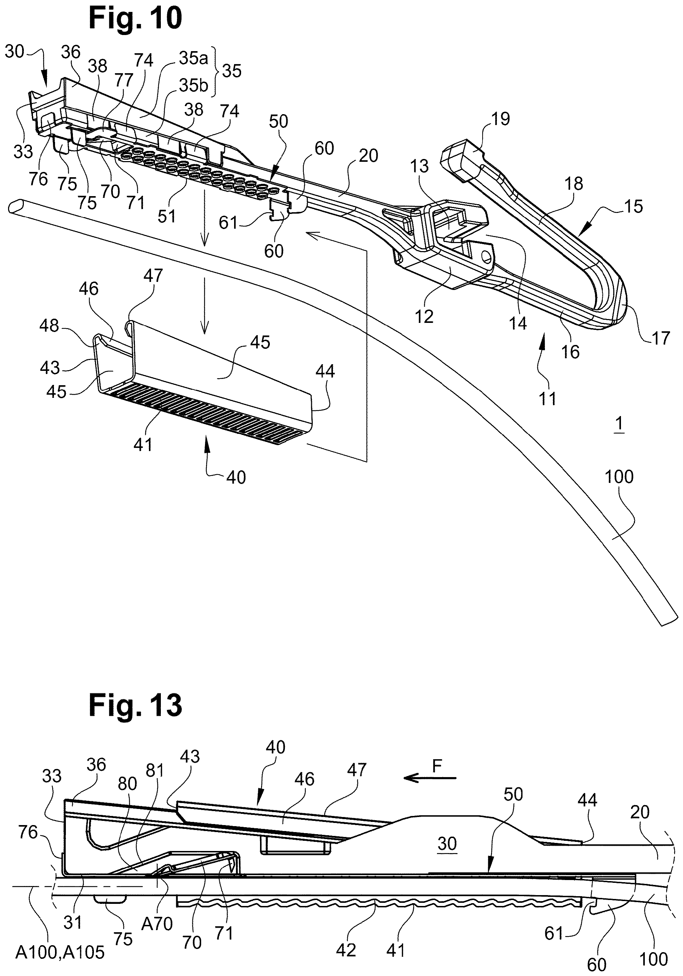

Par ailleurs, comme on le voit sur la figure 13, le coin de serrage 30 comprend une cavité 80 qui est ouverte vers le bas et qui présente une face amont 81 inclinée vers l'aval et vers le haut. En outre, comme illustré sur la figure 10, les faces latérales 35 du coin de serrage 30 comportent chacune :
- une bande supérieure 35a qui s'étend depuis le bord supérieur 37 des nervures 36 et qui est légèrement inclinée vers le bas et vers le plan longitudinal médian P1, de façon similaire au premier mode de réalisation ;
- une bande inférieure 35b qui prolonge la bande supérieure 35a et qui est légèrement inclinée vers le bas et dans le sens de l'éloignement par rapport au plan longitudinal médian P1, jusqu'à la face inférieure 31 du coin de serrage 30.

Comme illustré sur la figure 10, le montage du dispositif d'ancrage 1 s'effectue comme suit.

La plaquette 50 est montée sous le coin de serrage 30, la face supérieure 52 de la base 51 étant sensiblement contre la face inférieure 31 du coin de serrage 30, et les languettes 60 étant du côté aval. Pour ce faire, la plaquette 50 est positionnée sous le coin de serrage 30 de façon que les pattes latérales 74 soient situées chacune dans l'alignement de l'un des renfoncements 38 ménagées dans la face latérale 35 du coin de serrage 30, plus précisément dans la bande inférieure 35b. Ceci facilite la mise en place de la plaquette 50. Puis la plaquette 50 est déplacée longitudinalement vers l'aval par rapport au coin de serrage 30, jusqu'à ce que la paroi amont de butée 76 vienne en contact avec la face amont 33 du coin de serrage 30. Les pattes latérales 74 sont alors décalées par rapport aux renfoncements 38. Ainsi, du fait de la légère inclinaison des pattes latérales 74 l'une vers l'autre et de la forme en trapèze du coin de serrage 30 au niveau des bandes inférieures 35b, les pattes de serrage 74 enserrent le coin de serrage 30, empêchant donc la désolidarisation intempestive de la plaquette 50. Cependant, un coulissement relatif de la plaquette 50 par rapport au coin de serrage 30 est possible.

Comme on le voit sur la figure 13, le dispositif d'ancrage 1 est configuré de sorte que, lorsque la paroi amont de butée 76 est en contact avec la face amont 33 du coin de serrage 30, la patte 70 et la lame de coupe 71 sont reçues dans la cavité 80 et sont en position inactive. L'axe A70 est alors à distance et en aval de la face amont 81 de la cavité 80. La paroi amont de butée 76 forme ainsi une référence du positionnement relatif des pièces en position montée.

Le câble 100 est placé longitudinalement contre le fond 41 du fourreau 40, puis le fourreau 40 est mis en place autour du coin de serrage 30, de façon similaire à ce qui a été décrit pour le premier mode de réalisation. Pendant cette étape, l'opérateur s'assure que le câble 100 est bien reçu entre les pattes de centrage 75 de la plaquette 50. Il est à noter que la disposition des languettes 60 ne gêne pas la mise en place du fourreau 40 autour du coin de serrage 30.

La position montée est illustrée sur la figure 13. Le fourreau 40 et le coin de serrage 30 sont en position de coincement relatif. Le câble 100 est en place longitudinalement dans le logement 105, serré entre le fond 41 du fourreau 40 et la base 51 de la plaquette 50, maintenu par rapport à la plaquette 50 grâce aux reliefs 54. La tension du câble 100 a été ajustée de façon appropriée au cours du montage.

Les languettes 60 s'étendent à l'extérieur du fourreau 40, chaque encoche 61 étant en regard - le long de la direction longitudinale X - du fond 41 du fourreau 40. Les bords 64 des languettes 60 peuvent être à distance de l'extrémité aval 44 du fourreau 40, c'est-à-dire que le fond 41 du fourreau 40 ne pénètre pas les encoches 61.

La patte 70 et la lame de coupe 71, qui sont en position inactive, sont logées dans la cavité 80. La patte 70 s'étend en oblique en direction du coin de serrage 30, et la lame de coupe 71 est située à distance du logement 105 de réception du câble 100.

En position montée, lorsqu'une traction F suffisante s'exerce sur le câble 100 vers l'amont, le câble 100 ainsi que la plaquette 50 par rapport à laquelle il est maintenu par les reliefs 54 sont déplacés vers l'amont jusqu'à ce que le fond 63 des encoches 61 situées du côté aval vienne en butée contre l'extrémité aval 44 du fourreau 40. Chacune des encoches 61 reçoit alors une portion du fond 41 du fourreau 40, et est donc en prise avec ce fond 41, comme on le voit sur la figure 14. Les languettes 60 ne sont donc pas en simple butée contre le fourreau 40, mais accrochées au fourreau 40.

Si la traction F dépasse un seuil prédéfini, susceptible de causer des dommages au support 150, le dispositif d'ancrage 1 est conçu pour provoquer la séparation par rapport au support 150 d'une portion amont 101 du câble 100. Ce seuil peut être de l'ordre de 1200 à 2000 N.

Selon ce deuxième mode de réalisation, les moyens de séparation du dispositif d'ancrage 1 comprennent ou sont formés par la lame de coupe 71.

De façon concrète, la plaquette 50 est agrippée au câble 100 par les reliefs 54 et accrochée au fourreau 40 par les encoches 61 des languettes 60, si bien que la traction vers l'amont exercée sur le câble 100 conduit au déplacement en un seul ensemble de ces trois pièces (câble 100, fourreau 40, plaquette 50). Du fait de la force de traction F exercée sur le câble 100, le coin de serrage 30, accroché au support 150, se déplace donc vers l'aval par rapport à cet ensemble de trois pièces.

Du fait de ce déplacement du coin de serrage 30, la face amont 81 de la cavité 80 vient en contact avec la patte 70 et provoque son pivotement vers sa position active. La face inférieure 31 du coin 30 vient ensuite en contact avec la patte 70 et la rabat sensiblement dans le plan de la base 51 de la plaquette 50. La lame de coupe 71 fait alors saillie à l'intérieur du logement 105, sur une distance suffisante pour couper le câble 100 situé dans le logement 105.

En conséquence, la partie amont 101 du câble, sur laquelle s'exerce la traction F, n'est plus accrochée au support 150 et tombe. Le support 150 est ainsi préservé des dommages qu'auraient pu occasionner la forte traction F.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

Par exemple, dans le premier mode de réalisation, il pourrait être prévu que les languettes pourvues d'encoches soient conçues pour venir en prise avec le fond du fourreau et non ses ailes.

## Revendications

1. Dispositif d'ancrage (1) d'un câble (100) à un support (150), tel qu'un poteau, le dispositif définissant une direction longitudinale (X), un côté aval situé du côté du support (150) en position montée, et un côté amont opposé au côté aval, le dispositif comprenant :
- un corps (10) comportant :
-- du côté aval, des moyens d'accrochage (11) au support (150) ;
-- du côté amont, un coin de serrage (30) présentant une forme qui converge en direction des moyens d'accrochage (11) ;
- un fourreau (40) présentant une section transversale en U et comportant un fond (41) et deux ailes (45), le fourreau (40) présentant une forme convergeant vers l'aval et étant monté autour du coin de serrage (30) de façon coulissante longitudinalement, le déplacement du fourreau (40) vers l'amont par rapport au corps (10) occasionnant un rapprochement entre le coin de serrage (30) et le fond (41) du fourreau (40) ;
- une plaquette (50) montée entre le coin de serrage (30) et le fourreau (40), la plaquette (50) comportant :
-- une base (51) globalement plane qui, en position montée, est disposée sensiblement parallèlement au fond (41) du fourreau (40) de sorte qu'est défini entre la base (51) de la plaquette (50) et le fond (41) du fourreau (40) un logement (105) de réception d'un câble (100), ledit logement (105) s'étendant longitudinalement, la base (51) de la plaquette (50) comportant des moyens de maintien (54) configurés pour coopérer avec un câble (100) disposé dans le logement (105) pour maintenir le câble (100) en position par rapport à la plaquette (50) au moins selon la direction longitudinale (X) ;
-- au moins à sa partie extrême aval, au moins une languette (60) faisant saillie par rapport à la base (51), la languette (60) s'étendant à l'extérieur du fourreau (40) ;
- des moyens de séparation (21, 71) configurés pour provoquer, en position montée, la séparation par rapport au support (150) d'une portion amont (101) d'un câble (100) placé dans le logement (105) du dispositif d'ancrage (1), lesdits moyens de séparation (21, 71) étant configurés pour être activés lorsqu'une traction exercée sur le câble (100) vers l'amont dépasse un seuil prédéfini ;
le dispositif d'ancrage (1) étant **caractérisé en ce que** la languette (60) de la plaquette (50) comprend une encoche (61) qui, en position montée, est apte à venir en prise avec le fourreau (40) consécutivement à une traction exercée sur le câble (100) vers l'amont, en-deçà dudit seuil prédéfini, de sorte que la plaquette (50) vienne s'accrocher sur le fourreau (40).

2. Dispositif d'ancrage selon la revendication 1, **caractérisé en ce que**, à son extrémité aval, la plaquette (50) comprend deux languettes (60) faisant saillie par rapport à la base (51), chacune des languettes (60) s'étendant à l'extérieur du fourreau (40) et au moins l'une d'elles comprenant une encoche (61).

3. Dispositif d'ancrage selon la revendication 1 ou 2, **caractérisé en ce que** la plaquette (50) comprend à sa partie extrême amont au moins une languette (60) faisant saillie par rapport à la base (51), s'étendant à l'extérieur du fourreau (40) et comprenant une encoche (61).

4. Dispositif d'ancrage selon l'une des revendications 1 à 3, **caractérisé en ce que** la languette (60) est située sensiblement dans le même plan que la base (51) de la plaquette (50) et s'étend latéralement par rapport à la base (51), et **en ce que** l'encoche (61) ménagée dans la languette (60) est apte à venir en prise avec une aile (45) du fourreau (40).

5. Dispositif d'ancrage selon l'une des revendications 1 à 3, **caractérisé en ce que** la languette (60) s'étend sensiblement orthogonalement à la base (51) de la plaquette (50), à l'opposé du coin de serrage (30), et **en ce que** l'encoche (61) ménagée dans la languette (60) est apte à venir en prise avec le fond (41) du fourreau (40).

6. Dispositif d'ancrage selon l'une des revendications 1 à 5, **caractérisé en ce que** les moyens de séparation comprennent une zone de moindre résistance (21), par exemple une zone de moindre section, ménagée sur une portion (20) du corps (10) qui lie le coin de serrage (30) et les moyens d'accrochage (11).

7. Dispositif d'ancrage selon l'une des revendications 1 à 6, **caractérisé en ce que** les moyens de séparation comprennent une lame de coupe (71) qui est montée sur la plaquette (50) entre :
- une position inactive dans laquelle la lame de coupe (71) est située à distance du logement (105) de réception du câble (100) ;
- et une position active dans laquelle la lame de coupe (71) fait saillie à l'intérieur du logement (105) sur une distance suffisante pour couper un câble (100) situé dans le logement (105) ;
le passage de la lame de coupe (71) de sa position inactive à sa position active étant provoqué par le déplacement du coin de serrage (30) vers l'aval relativement à la plaquette (50).

8. Dispositif d'ancrage la revendication 7, **caractérisé en ce que** la plaquette (50) comprend une patte (70) montée pivotante par rapport à la base (51) autour d'un axe (A70) sensiblement transversal, la lame de coupe (71) étant ménagée sur la patte (70) à distance dudit axe (A70), la plaquette (50) comportant une ouverture (72) en regard de ladite patte (70), la patte (70) pouvant pivoter entre :
- une position inactive dans laquelle la patte (70) s'étend en oblique en direction du coin de serrage (30) ;
- et une position active dans laquelle la patte (70) est sensiblement rabattue dans le plan de la base (51) de la plaquette (50) et la lame de coupe (71) traverse l'ouverture (72).

9. Dispositif d'ancrage selon la revendication 8, **caractérisé en ce que** le coin de serrage (30) comprend une cavité (80) ouverte vers le bas dans laquelle sont reçues la patte (70) et la lame de coupe (71) en position inactive, une face amont (81) de la cavité (80) formant une rampe qui est inclinée vers l'aval et à l'opposé du fond (41) du fourreau (40) et qui est configurée pour venir en contact avec la patte (70) et provoquer son pivotement vers sa position active lorsque le coin de serrage (30) se déplace vers l'aval relativement à la plaquette (50).

10. Dispositif d'ancrage selon la revendication 9, dans lequel le coin de serrage (30) présente une face amont (33), **caractérisé en ce que** la plaquette (50) est assemblée sur le coin de serrage (30) de façon mobile en translation longitudinale, la plaquette (50) comportant une paroi amont de butée (76) limitant la translation vers l'aval de la plaquette (50) par rapport au coin de serrage (30), le dispositif d'ancrage (1) étant configuré de sorte que, lorsque la paroi amont de butée (76) est en contact avec la face amont (33) du coin de serrage (30), la patte (70) et la lame de coupe (71) sont reçues dans la cavité (80) et sont en position inactive.

11. Ensemble comprenant un dispositif d'ancrage selon l'une des revendications précédentes et un câble (100) s'étendant longitudinalement dans le logement (105) ménagé entre la base (51) de la plaquette (50) et le fond (41) du fourreau (40).
